Europäisches Patentamt

European Patent Office

Office européen des brevets

(19)

(11) Publication number: **0 268 344 B1**

(12) **EUROPEAN PATENT SPECIFICATION**

(45) Date of publication of patent specification: **11.12.91**  (51) Int. Cl.5: **C11D 17/00**, C11D 3/00

(21) Application number: **87302840.1**

(22) Date of filing: **01.04.87**

The file contains technical information submitted after the application was filed and not included in this specification

(54) Cleansing method and spray lustering-cleansing agent.

(30) Priority: **21.08.86 JP 194038/86**

(43) Date of publication of application:
**25.05.88 Bulletin 88/21**

(45) Publication of the grant of the patent:
**11.12.91 Bulletin 91/50**

(84) Designated Contracting States:
**DE FR GB**

(56) References cited:
**DE-A- 2 258 365**
**FR-A- 1 200 219**
**FR-A- 2 264 086**

(73) Proprietor: **TAIHO INDUSTRIES Co., LTD.**
**21-44 Takanawa 2-chome**
**Minato-ku Tokyo(JP)**

(72) Inventor: **Ohara, Sosaburo**
**2-11-28 Minami Tsukushino**
**Machida-shi Tokyo(JP)**
Inventor: **Ikeda, Atsushi**
**493-2 Endo**
**Fujisa a-shi Kanagawa-ken(JP)**
Inventor: **Shinohara, Seigo**
**1-1-7-302 Tsutsumi**
**Chigasaki-shi Kanagawa-ken(JP)**
Inventor: **Kijima, Tetsuo**
**2-9-4 507 Tsujido Nishikaigan**
**Fujisawa-shi Kanagawa-ken(JP)**

(74) Representative: **Daley, Michael John et al**
**F.J. CLEVELAND & COMPANY 40/43 Chancery Lane**
**London, WC2A 1JQ(GB)**

## Description

This invention relates to a novel spray type lustering-cleansing agent and a method for cleansing a surface by the use thereof. More particularly this invention relates to a lustering-cleansing method capable of removing dirt from rubber and plastic surfaces such as of tires and bumpers in an automobile and, at the same time, lustering the surfaces and to the cleansing agent used therefor.

Generally, cleansing of dirty tires and bumpers of an automobile is carried out by first brushing and wetting the dirty surfaces, then washing the resulting dirty slurry off the surfaces, subsequently spraying a spray type lustering agent on the freshly cleaned surfaces, and wiping the deposited lustering agent from the surfaces as with rags for finishing.

This method, owing to the action of brushing involved, has the disadvantage that it may mar aluminum wheels and the paint etc. of the bumper.

The spray type lustering-cleansing agents heretofore known to the art are those of the solvent type produced by dissolving silicone oil in petroleum type solvents and chlorine type solvents and those of the o/w emulsion type produced by emulsifying silicone oil with water.

Among the spray lustering-cleansing agents mentioned above, those of the solvent type have the merit of quickly drying and, on the other hand, suffer from the disadvantage that some, if not all, of the solvents used therein dissolve out components of the bumper paint finish and swell and discolor the rubber in the tires, and consequently have adverse effects on rubber and paint coatings.

The spray lustering-cleansing agents of the aforementioned solvent type, because of their use of volatile solvents, also have the disadvantage that they have harmful effects on the health of the workers handling them.

The spray lustering-cleansing agents of the o/w emulsion type are free from the disadvantage of adverse effects on rubber and coatings, but they suffer from the disadvantage that foamed agents deposited on the surface do not easily vanish and must be wiped off with rags for finishing and, therefore, the cleansing work is strenuous.

In the circumstances, a need has arisen for the development of a cleansing method which, by simple spraying, cleanses and lusters a surface thoroughly without injuring the surface, dissolving paint coatings, or exerting any adverse effect on the health of the worker. A cleansing agent for use with such a method has also become necessary.

The present invention has been perfected for the purpose of meeting this need. To be specific, this invention is directed to a cleansing method which is characterized by the steps of spraying on a dirty surface a lustering-cleansing agent comprising a water-based material containing silicone oil in the form of an emulsion and a propellant, and a foam regulation agent further added thereto, thereby allowing the lustering-cleansing agent to be deposited in a foamed state on the surface, then forcibly rupturing the foamed Disclosures of prior art agents have been given in a number of United States patents. Patent Number 4,010,110 discloses a composition as a cleansing agent. This agent does not foam from the beginning. Patent Number 4,269,739 pertains to a composition as a cleansing agent. It makes no mention about the condition of foaming and defoaming which this composition would manifest if it were prepared in the form of an aerosol spray. Patent Number 4,374,745 teaches a composition as a cleansing agent. It makes no mention about the condition of foam which the composition would manifest if it were prepared as an aerosol spray. The composition in the form of gel or in a thixotropic state does not foam after the manner of an aerosol. Patent Number 4,675, 125 is directed to a composition as a cleansing agent. The cleansing agent uses a defoaming agent for the purpose of preventing foaming which is undesirable during the manufacture and use of the composition. All of these U.S. patents are silent on the foam which would be generated if the composition should be prepared in the form of an aerosol spray. It can be presumed, therefore, that these four U.S. patents contemplate adding a foam regulating agent purely for the purpose of preventing the composition from foaming. None of them suggests, let alone discloses, the use of a foam regulating agent for the purpose of allowing the composition to remain in a foamed state and then defoam completely as in the case of the present invention. agent for thereby converting the foam into a liquid and enabling the liquid to occlude the dirt adhering to the surface, and subsequently removing the liquid from the surface, and to a spray lustering-cleansing agent which comprises a water-based material containing silicone oil in the form of an emulsion, and a propellant added to the water-based material, and a foam regulation agent further added thereto and is used in working the cleansing method described above.

The term "base material" as used in the present invention means a water-based material which contains silicone oil in the form of an emulsion.

The term "silicone oil" as used herein means a silicone oil of the type having the ability to luster surfaces. Examples of the silicone oil meeting this description include dimethyl silicone oil, phenyl methyl

2

silicone oil, amino-modified silicone oil, epoxy-modified silicone oil, and fatty acid-modified silicone oil.

The aforementioned base material can be obtained by combining this silicone oil with an emulsifier such as, for example, oleic acid morpholin soap, oleic acid triethanolamine soap, sodium alkylbenzenesulfonate, polyoxyethylene alkyl phenol ether, polyoxyethylene alkyl ether, or polyoxyethylene fatty ester and a petroleum type solvent such as kerosene, mineral spirit A, normal paraffin type solvent, or isoparaffin type solvent to stabilize the emulsion and facilitate removal of oily dirt, adding to the resulting blend a suitable amount of a polyhydric alcohol such as, for example, ethylene glycol, propylene glycol, or triethylene glycol to prevent deterioration and improve the levelling property of the cleansing agent relative to the surface, and emulsifying the resulting blend in water.

The content of the silicone oil in the base material is in the range of 5 to 60% by weight, preferably 10 to 20% by weight. If the silicone oil content is smaller, the lustering-cleansing agent is deficient in waterproofness, water repellency, and lustering property and fails to fulfil the expected function sufficiently. If the silicone oil content is larger, the lustering-cleansing agent unevenly coats the sprayed surface and the surface takes on an unpleasant, excessively shining appearance and becomes susceptible to adherence of dust, dirt, mud etc.

The emulsifier is incorporated for the purpose of effecting emulsification of the silicone oil in water and the solvent for the purpose of stabilizing the formed emulsion and facilitating removal of oily dirt. The content of the emulsifier in the base material is required to fall in the range of 0.5 to 10.0% by weight and the content of the solvent in the range of 0 to 30.0% by weight. Preferably, the ranges are 1.0 to 5.0% by weight and 0 to 10% by weight respectively.

The lustering-cleansing agent of this invention is enabled to manifest the effect thereof to an enhanced extent by the addition of a foam regulation agent to the base material. The foam regulation agent thus used herein may be any of the preparations known to the art as useful for the purpose. Examples of the foam regulation agent include surfactant type agents such as polyoxyalkylene glycol alkyl ether, polyoxyalkylene glycol alkyl ester, and polyoxyethylene polyoxypropylene block copolymer, alcohol type agents such as methanol of one carbon atom through dodecanol of 12 carbon atoms ($C_nH_{2n+1}OH$: n = 1 to 12), emulsion type agents having silicone oil, higher alcohols, hardened beef tallow, and wax emulsified with the aid of an emulsifier in water, and oil slurry tape agents having waxes such as amide wax and polyethylene wax dispersed in the form of slurry in mineral oils as vehicles. One member or a suitable combination of two or more members selected from the group of foam regulation agents cited above can be used in an amount of not more than 2% by weight, based on the amount of the base material. If the amount of the foam regulation agent thus added exceeds this upper limit, the lustering-cleansing agent is not readily foamed as expected when it is sprayed onto the surface. Then, the lustering-cleansing agent no longer functions as a quality product. To be practical, the amount of the foam regulation agent so added is desired to fall in the range of 0.1 to 1.5% by weight, on the aforementioned basis. Since the lustering-cleansing agent is used by spraying, a propellant such as, for example, liquefied petroleum gas, dimethyl ether, $N_2$ gas, $CO_2$ gas, or fluorinated hydrocarbon gas is packed in a spray can in an amount such that the ratio of the propellant to the water based material falls in the range of 30 : 70 to 5: 95 by weight. One member or a suitable combination of two or more members selected from the group of propellants mentioned above can be used.

With the lustering-cleansing agent of this invention, a given surface is treated as follows. For cleaning tyres and bumpers of an automobile, for example, the lustering-cleansing agent is sprayed onto the surfaces and allowed to be deposited in a foamed state on the surface and then left standing for a fixed length such as, for example, a period in the range of 5 to 20 minutes. During this standing period, the applied foamed agent spontaneously converts into a liquid occluding the dirt from the surfaces. By causing this liquid to run off, the tyres and the bumpers are cleansed.

It is thought that this cleansing proceeds through the following mechanism. (a) When the lustering-cleansing agent is sprayed in a foamed state on a surface, the foam occludes dust, mud, and other defiling substances adhering to the surface and stagnates on the surface. In the course of this stagnation, the lustering-cleansing agent permeates the dirt and weakens the strength with which the dirt adheres to the surface. (b) The dirt which has partly lost its strength of adhesion is separated from the surface when the foam is converted through rupture into the liquid by the action of the foam regulation agent contained in the lustering-cleansing agent. (c) The dirt which has thus been separated from the surface is made to flow down together with the liquid resulting from the ruptured foam.

This invention accomplishes the cleansing and lustering of the tires and bumpers of an automobile, for example, in the manner described above. The spray lustering-cleansing agent of this invention is an o/w type preparation having a silicone oil emulsified in water. When it is used in cleansing tires or bumpers, for example, it brings about no such adverse effect as swelling the rubber or dissolving out paint and, unlike the conventional cleansing agents of the solvent type, has no harmful effect on the human body. It is thus

3

safe to use.

Further, when tires or bumpers are treated with the lustering-cleansing agent of this invention, since the cleaned surface is lustered by being coated with the silicone oil and, at the same time, conferred hydrophobicity, the liquid which has resulted from rupture of foam and has occluded the dirt is allowed to flow down smoothly and quickly.

Further in the present invention, since the water-based material containing the silicone oil in the form of emulsion further incorporates therein a suitable amount of a foam regulation agent, the produced foam is enabled to adhere to the surface for a proper time, convert itself into a liquid and, as such, flow down the surface in conjunction with the dirt adhering to the surface. During the rupture, the foam liberates the silicone so far retained in the form of emulsion and deposits it fast on the surface of tires or bumpers, with the result that the deposited silicone lusters the surface.

The term "proper time" as used herein means such time as is required for the dirt to float up and flow down the surface. A span in the range of 20 seconds to 5 minutes suffices. This span is desirably in the range of 2 to 60 seconds, preferably 20 to 30 seconds.

In accordance with this invention, therefore, tires and bumpers can be cleaned and lustered without particularly requiring the work of wiping. In this respect, this invention contributes to improving the efficiency of the work of cleansing.

Now, the present invention will be described more specifically below with reference to working examples.

First, lustering-cleansing agents according to the present invention and cleansing agents not conforming to the present invention and intended for comparison were prepared.

The preparation of a lustering-cleansing agent of this invention was carried out specifically by stirring a silicone oil with an emulsifier and a polyhydric alcohol and, when necessary, subjecting the resulting mixture and a foam regulation agent added thereto to high-speed stirring until homogeneity, adding a small portion of the water required for emulsification to the homogeneous mixture thereby forming a pre-gel, and emulsifying this pre-gel in the presence of the remaining portion of the water with an emulsifying machine. As a result, there was obtained a lustering-cleansing agent of this invention which comprised a water-based material containing silicone oil in the form of an emulsion, a propellant added to the water-based material, and a foam regulation agent further added thereto. A cleansing agent consisting of different components than those according to the invention was also prepared for comparison.

Then, these agents were each combined with a propellant and packed in a spray can and sprayed onto a surface subjected to cleansing. The liquids formed on the surfaces were left to flow off. At this time the agents were evaluated with regard to the various qualities indicated below. The results were as shown in Table.

Method of Evaluation

1. Levelling property:

A sample tire was sprayed with a given agent for 3 seconds. The surface condition of the sample tire was visually observed with respect to the levelling property of the agent. The surface condition so observed was rated on a three-point scale, wherein:

o: The surface condition of the tire was substantially uniform.

Δ: The surface condition of the tire was such that slight signs of streaks, wrinkles, and irregularities appeared.

x: The surface condition of tire was such that signs of irregularities existed in not less than half of the entire surface.

2. Wiping property:

A sample tire was sprayed with a given agent for 3 seconds. Then the applied agent was tested for working property. The results of the wiping property consequently determined was rated on a three-point scale, wherein:

o: Absolutely no wiping was required.

Δ: Slight wiping was required.

x: Strong wiping was required.

3. Effects on rubber:

A SBR rubber sample (50 × 50 mm) suspended vertically was sprayed with a given agent from a spray can held at a distance of 2 cm from the sample. The agent thus deposited on the sample, without being wiped off, was left standing at room temperature for 24 hours. After the standing period, the sample was visually observed with respect to the surface condition. The results were rated on a three-point scale, wherein:

o: No abnormality was present.

Δ: Signs of discoloration with slight tarnishing was detected.

x: Signs of swelling and discoloration were detected.

4. Foaming property and foam-removing property:

A sample tire was sprayed with a given agent for 3 seconds. The foam consequently formed was observed visually for its condition, immediately after formation and after one minute's sanding. The results were rated on a four-point scale, wherein:

o: The foam initially produced was completely absent after one minute's standing.

Δ: The foam initially produced slightly remained after one minute's standing.

$x_1$: No foam was produced initially.

$x_2$: The foam initially produced remained intact even after one minute's standing.

5. Odor:

A sample tire was sprayed with a given agent. During the spraying, the smell of the ambient air was examined for the presence of odor emitted from the tire surface. The results were evaluated on a three-point scale, wherein:

o: No odor was present.

Δ: Slight odor was present.

x: Distinct odor was present.

6. Cleansing property:

A sample tire was sprayed with a given agent for 3 seconds and the foam consequently produced was kept under visual observation to determine whether or not it occluded dirt and then flowed down the surface. The results were evaluated on a three-point scale, wherein:

o: The foam occluded the dirt and flowed down the surface smoothly.

Δ: The foam slightly occluded the dirt and flowed down the surface.

x: The foam failed to occlude the dirt and sparingly flowed down the surface.

The compositions used for the lustering-cleansing agents according to this invention and the cleansing agents not conforming to this invention were as shown below.

| EXAMPLE 1 (o/w emulsion type) | |
| --- | --- |
| Dimethyl silicone oil (1,000 cst)($10^{-3}M^2/S$) | 20.0% by weight |
| POE (9) nonyl phenyl ether (produced by Dai-ichi Kogyo Seiyaku Co., Ltd. and marketed under trademark designation of NOIGEN EA-120; HLB = 12) | 1.5% by weight |
| POE (6) nonyl phenyl ether (produced by Dai-ichi Kogyo Seiyaku Co., Ltd. and marketed under trademark designation of NOIGEN EA-80; HLB = 10) | 2.0% by weight |
| Ethylene glycol | 2.5% by weight |
| Silicone emulsion type foam regulation agent containing 25% by weight of principal component | 0.4% by weight |
| Water | 58.6% by weight |
| Propellant (liquefied petroleum gas) | 15.0% by weight |
| | 100.0 |

| EXAMPLE 2 (o/w emulsion type) | |
| --- | --- |
| Dimethyl silicone oil (1,000 cst)($10^{-3}M^2/S$) | 20.0% by weight |
| sodium oleate (produced by Nippon Oils & Fats Co., ltd. and marketed under trademark designation of NONSAL ON-1) | 2.5% by weight |
| Ethylene glycol | 2.5% by weight |
| Polyoxyalkylene glycol ester (foam regulation agent) | 0.4% by weight |
| Water | 59.6% by weight |
| Propellant (liquefied petroleum gas) | 15.0% by weight |
| | 100.0 |

| EXAMPLE 3 (o/w emulsion type) | |
| --- | --- |
| Dimethyl silicone oil (1,000 cst)($10^{-3}M^2/S$) | 20.0% by weight |
| POE (20) sorbitan monooleate (produced by Nikko Chemicals Co., Ltd. and marketed under trademark designation of NIKKOL TO-10; HLB = 15.0) | 1.0% by weight |
| POE (6) monooleate (produced by Nikko Chemicals Co., Ltd. and marketed under trademark designation of NIKKOL MYD-6; HLB = 8.5) | 2.5% by weight |
| Propylene glycol | 2.5% by weight |
| Foam regulation agent prepared in the form of slurry by dispersing 5% by weight of amide wax in mineral oil | 0.4% by weight |
| Water | 58.6% by weight |
| Propellant (liquefied petroleum gas) | 15.0% by weight |
| | 100.0 |

| EXAMPLE 4 (o/w emulsion type) | |
| --- | --- |
| Dimethyl silicone oil (1,000 cst)($10^{-3}M^2/S$) | 15.0% by weight |
| Dimethyl silicone oil (10,000 cst)($10^{-2}M^2/S$) | 5.0% by weight |
| Oleic acid | 2.5% by weight |
| morpholin | 1.5% by weight |
| Triethylene glycol | 2.5% by weight |
| Isoparaffin type solvent (boiling point ranging from 160° to 200° C) (produced by Idemitsu Petrochemical Co., Ltd. and marketed under Product Code of IP-1620) | 5.0% by weight |
| Polyoxyalkylene glycol alkyl ester | 1.5% By weight |
| Water | 62.0% by weight |
| Propellant (liquefied petroleum gas) | 5.0% by weight |
| | 100.0 |

| EXAMPLE 5 (o/w emulsion type) | |
| --- | --- |
| Dimethyl silicone oil (1,000 cst)($10^{-3}M^2/S$) | 15.0% by weight |
| Amino-modified silicone oil (produced by Toray Silicone Co., Ltd. and marketed under Product Code of SF-8417) | 5.0% by weight |
| POE (20) cetyl ether (produced by Nikko Chemicals Co., Ltd. and marketed under trademark designation of NIKKOL BC-20TX; HLB = 17.0) | 1.0% by weight |
| POE (2) oleyl ether (produced by Nikko Chemicals Co., Ltd. and marketed under trademark designation of NIKKOL BO-2; HLB = 7.5) | 2.5% by weight |
| Ethylene glycol | 2.5% by weight |
| Paraffin type solvent (boiling point ranging from 185° to 215° C (produced Nippon Oil Company, Limited, and marketed under Product Code of ZERO SOLVENT L) | 5.0% by weight |
| Isopropyl alcohol | 1.8% by weight |
| Water | 52.2% by weight |
| Propellant 1 (liquefied petroleum gas) | 13.0% by weight |
| Propellant 2 ($N_2$ gas) | 2.0% by weight |
| | 100.0 |

6

| EXAMPLE 6 (o/w emulsion type) | |
| --- | --- |
| Dimethyl silicone oil (1,000 cst)($10^{-3}M^2/S$) | 15.0% by weight |
| Dimethyl silicone oil (10,000 cst)($10^{-2}M^2/S$) | 5.0% by weight |
| POE (20) sorbitan monooleate | 1.0% by weight |
| POE (6) monooleate | 2.5% by weight |
| Propylene glycol | 2.5% by weight |
| Isopropyl alcohol | 1.8% by weight |
| Isoparaffin type solvent | 5.0% by weight |
| Water | 52.2% by weight |
| Propellant (liquefied petroleum gas) | 15.0% by weight |
| | 100.0 |

| COMPARATIVE EXPERIMENT 1 (solvent type) | |
| --- | --- |
| Dimethyl silicone oil (1,000 cst)($10^{-3}M^2/S$) | 20.0% by weight |
| 1,1,1-Trichloroethane | 62.5% by weight |
| Triethylene glycol | 2.5% by weight |
| Propellant (liquefied petroleum gas) | 15.0% by weight |
| | 100.0 |

| COMPARATIVE EXPERIMENT 2 (w/o emulsion type) | |
| --- | --- |
| Dimethyl silicone oil (2,000 cst) ($2x10^{-3}M^2/S$) | 15% by weight |
| Paraffin type solvent (boiling point ranging from 160° to 200° C) | 35% by weight |
| Water | 25% by weight |
| POE (3) nonyl phenol ether | 5% by weight |
| Propellant (liquefied petroleum gas) | 20% by weight |
| | 100.0 |

| COMPARATIVE EXPERIMENT 3 (o/w emulsion type) | |
| --- | --- |
| Dimethyl silicone oil | 24% by weight |
| POE (6) nonyl phenol ether | 2.4% by weight |
| POE (9) nonyl phenol ether | 1.8% by weight |
| Water (Propelled with a pump) | 71.8% by weight |
| | 100.0 |

Table 1

| | Example | | | | | | | | Comparative Experiment | | |
|---|---|---|---|---|---|---|---|---|---|---|---|
| | 1 | 2 | 3 | 4 | 5 | 6 | 7 | 8 | 1 | 2 | 3 |
| Levelling property | o | o | o | o | o | o | Δ | o | x | Δ | x |
| Wiping property | o | o | o | o | o | Δ | Δ | o | Δ | Δ | x |
| Effect on rubber | o | o | o | o | o | o | Δ | Δ | x | Δ | o |
| Foaming property and foam removing property | o | o | o | o | o | Δ | Δ | Δ | $x_1$ | $x_2$ | $x_1$ |
| Odor | o | o | o | o | Δ | o | Δ | Δ | x | Δ | o |
| Cleansing property | o | o | o | o | o | o | o | o | Δ | x | x |

It is noted from the results given above that the lustering-cleansing agents of Examples 1-8 according to the present invention earned satisfactory marks with respect to substantially all items of the test, whereas the comparative cleansing agent gained poor marks.

## Claims

1. A method for cleansing a surface by spraying thereon a spray lustering-cleansing agent of an oil in water emulsion type, consisting of a propellant and a water-based material containing substantially as main components thereof 5 to 60% by weight of silicone oil, 0.5 to 10% by weight of an emulsifier, 0 to 30% by weight of a solvent, not more than 2% by weight of a foam regulating agent, and water with the weight ratio of said propellant to said water-based material in the range of 30 : 70 to 5: 95 in the form of emulsion, spraying said lustering-cleansing agent on said surface thereby enabling said lustering -cleansing agent to be deposited in a foamed state on said surface, allowing the foamed agent to stand for a prescribed time and convert itself through rupture into a liquid and occlude dirt from said surface, and removing said liquid from said surface.

2. The method of claim 1, wherein said foam regulation agent is at least one member selected from the group consisting of surfactant type agents, emulsion type agents having silicone oil, higher alcohols, hardened beef tallow, and wax emulsified in water, oil slurry type agents having silica and wax dispersed in oil in the form of slurry, and alcohol type agents.

3. A spray lustering-cleansing agent of an oil in water emulsion type, , consisting of a propellant and a water-based material containing substantially as main components thereof 5 to 60% by weight of silicone oil, 0.5 to 10% by weight of an emulsifier, 0 to 30% by weight of a solvent, not more than 2% by weight of a foam regulating agent, and water with the weight ratio of said propellant to said water-based material in the range of 30 : 70 to 5 : 95 in the form of emulsion type constitution.

4. The spray lustering-cleansing agent of claim 3, wherein said foam regulation agent is at least one member selected from the group consisting of surfactant type agents, emulsion type agents having silicone oil, higher alcohols, hardened beef tallow, and wax emulsified in water, oil slurry type agents having silica and wax dispersed in oil in the form of slurry, and alcohol type agents.

## Revendications

1. Un procédé de nettoyage d'une surface par pulvérisation sur celle-ci d'un agent de nettoyage et brillantage à pulvériser du type émulsion d'huile dans l'eau, contenant principalement comme agents principaux de 5 à 60 % en poids d'huile de silicone, de 0,5 à 10 % en poids d'un émulsifiant, de 0 à 30 % en poids d'un solvant, pas plus de 2 % en poids d'un agent régulateur de mousse, et d'eau dans un rapport pondéral de l'agent de propulsion sur le produit à base d'eau compris entre 30 : 70 et 5 : 95 , sous la forme d'une émulsion, consistant à pulvériser ledit agent de nettoyage-brillantage sur ladite surface, permettant par cela audit agent de nettoyage-brillantage de se déposer à l'état de mousse sur ladite surface; à permettre à l'agent sous forme de mousse de séjourner pendant un temps déterminé et de se transformer par rupture en liquide et d'occlure la saleté contenue sur ladite surface, et à enlever ledit liquide de ladite surface.

**2.** Procédé selon la revendication 1, dans lequel l'agent de régulation de mousse consiste en au moins un membre choisi dans le groupe formé par les agents de type tensio-actif, les agents de type émulsion contenant de l'huile de silicone, les alcools lourds, le suif de boeuf durci, et de la cire en émulsion dans l'eau, les agents de type dispersion d'huile, contenant de la silice et de la cire dispersée dans l'huile sous la forme de suspension et les agents de type alcool.

**3.** Agent de nettoyage et brillantage à pulvériser du type émulsion d'huile dans l'eau, consistant en un agent de propulsion et un produit à base d'eau, contenant essentiellement comme agents principaux de 5 à 60 % en poids d'huile de silicone, de 0,5 à 10 % en poids d'un émulsifiant, de 0 à 30 % en poids d'un solvant, pas plus de 2 % en poids d'un agent régulateur de mousse, et de l'eau dans le rapport pondéral dudit agent de propulsion sur ledit produit à base d'eau compris entre 30 : 70 et 5 : 95 , et se présentant sous la forme d'une émulsion.

**4.** Agent de brillantage à pulvériser suivant la revendication 3, dans lequel l'agent de régulation de mousse est constitué d'au moins un membre choisi dans le groupe formé par les agents de type tensio-actif, les agents de type émulsion contenant de l'huile de silicone, les alcools lourds, le suif de boeuf durci, et de la cire en émulsion dans l'eau, des agents de type dispersion contenant de la silice et de la cire sous forme dispersée dans de l'huile sous la forme de suspension et les agents de type alcool.

**Patentansprüche**

**1.** Verfahren zum Reinigen einer Oberfläche durch Aufsprühen eines glanzreinigenden Sprühmittels von der Art einer Öl-Wasser-Emulsion, das aus einem Treibmittel und einem Stoff auf Wasserbasis besteht, der im wesentlichen als Hauptkomponenten 5 bis 60 Gew.-% Silikonöl, 0,5 bis 10 Gew.-% eines Emulgators, 0 bis 30 Gew.-% eines Lösungsmittels, nicht mehr als 2 Gew.-% eines schaumregulierenden Mittels sowie Wasser in Emulsionsform enthält, wobei das Gewichtsverhältnis von Treibmittel zum Stoff auf Wasserbasis im Bereich von 30 : 70 bis 5 : 95 ist, wobei das glanzreinigende Mittel auf die Oberfläche gesprüht wird, wodurch das glanzreinigende Mittel sich in einem geschäumten Zustand auf der Oberfläche niederschlägt, wobei das geschäumte Mittel für eine vorgeschriebene Zeit beständig ist und sich durch Zerfallen in eine Flüssigkeit umwandelt und Schmutz von der Oberfläche aufnimmt, und wobei die Flüssigkeit von der Oberfläche entfernt wird.

**2.** Verfahren nach Anspruch 1, wobei das schaumregulierende Mittel mindestens eine Substanz aus der Gruppe enthält, die aus Substanzen nach Art oberflächenaktiver Substanzen, emulsionsartigen Substanzen, die Silikonöl, höhere Alkohole, gehärtetes Rindertalg sowie Wachs in Wasser emulgiert enthalten, ölschlammartigen Substanzen, die Silika und Wachs in einer Ölschlämme dispergiert enthalten, und aus alkoholartigen Substanzen besteht.

**3.** Glanzreinigendes Sprühmittel nach Art einer Öl-Wasser-Emulsion, bestehend aus einem Treibmittel und einem Stoff auf Wasserbasis, der im wesentlichen als Hauptkomponenten 5 bis 60 Gew.-% Silikonöl, 0,5 bis 10 Gew.-% eines Emulgators, 0 bis 30 Gew.-% eines Lösungsmittels, nicht mehr als 2 Gew.-% eines schaumregulierenden Mittels sowie Wasser in Form einer emulsionsartigen Konstitution enthält, wobei das Gewichtsverhältnis von Treibmittel zum Stoff auf Wasserbasis im Bereich von 30 : 70 bis 5 : 95 ist.

**4.** Glanzreinigendes Sprühmittel nach Anspruch 3, wobei das schaumregulierende Mittel mindestens eine Substanz aus der Gruppe enthält, die aus Substanzen nach Art oberflächenaktiver Substanzen, emulsionsartigen Substanzen, die Slikonöl, höhere Alkohole, gehärtetes Rindertalg sowie Wachs in Wasser emulgiert enthalten, ölschlammartigen Substanzen, die Silika und Wachs in einer Ölschlämme dispergiert enthalten, und aus alkoholartigen Substanzen besteht.